# EUROPÄISCHE PATENTANMELDUNG

(11) **EP 2 889 171 A1**
(43) Veröffentlichungstag der Anmeldung: **01.07.2015**
(21) Anmeldenummer: 14196632.5
(22) Anmeldetag: 05.12.2014
(51) Int. Cl.: B60J 7/12

(54) **Soft-Top-Verdeck eines Cabriolet-Fahrzeugs**

(30) Priorität: 30.12.2013 DE 102013114964
(71) Anmelder: Valmet Automotive Oy, 23500 Uusikaupunki (FI)
(72) Erfinder: Kreiling, Nils, 49080 Osnabrück (DE)
(74) Vertreter: Kronthaler, Wolfgang N.K.

(57) **Zusammenfassung**

Es wird ein Soft-Top-Verdeck (1) eines Cabriolet-Fahrzeugs mit einem flexiblen Verdeckbezug (3) vorgeschlagen, welches mittels eines Verdeckgestänges (7) zwischen einer einen Fahrgastraum (5) abdeckenden geschlossenen Position und einer den Fahrgastraum (5) zumindest teilweise freigebenden offenen Position verlagerbar ist, mit mehreren in geschlossener Verdeckposition hinter einer Dachspitze (9) angeordneten, wenigstens annähernd eine Breite des Verdecks (1) überspannenden Dachelementen (13, 15, 17) und in geschlossener Verdeckposition jeweils seitlich neben den Dachelementen (9, 13, 15, 17) angeordneten seitlichen Dachrahmenelementen (23, 25, 27, 29). Zur Überführung des Verdecks (1) zwischen der geschlossenen und der offenen Position ist ein Hauptlenkersystem (31) des Verdeckgestänges (7) mit einem seitlichen Dachrahmenelement (23, 25, 27, 29) oder einem Dachelement (13, 15, 17) verbunden und die Dachspitze (9) wirkt unter Zwischenschaltung mehrerer Lenker (49, 51, 53, 55, 57, 61, 63, 65, 67) des Verdeckgestänges (7) mit dem Hauptlenkersystem (31) zusammen. Wenigstens zwei Dachelemente (13 ,15) sind fest mit jeweils einem Lenker (61, 67) des Verdeckgestänges (7), welche jeweils zur Umsetzung einer Bewegung eines anderen Dachelements (9, 13, 15, 17) oder seitlichen Dachrahmenelements (23, 25, 27, 29) erforderlich sind, verbunden.

## Beschreibung

Die Erfindung betrifft ein Soft-Top-Verdeck eines Cabriolet-Fahrzeugs mit einem flexiblen Verdeckbezug, welches mittels eines Verdeckgestänges zwischen einer einen Fahrgastraum abdeckenden geschlossenen Position und einer den Fahrgastraum zumindest teilweise freigebenden offenen Position verlagerbar ist, nach der im Oberbegriff des Patentanspruches 1 näher definierten Art.

Aus der DE 10 2008 046 796 A1 ist ein derartiges Soft-Top-Verdeck bekannt, welches mit drei sogenannten Flächenspriegeln ausgebildet ist, wobei ein in geschlossener Verdeckposition in Verdecklängsrichtung vorderster Flächenspriegel eine Dachspitze darstellt. Ein hinter der Dachspitze angeordneter Flächenspriegel ist kinematisch an eine Hauptschere des Verdecks gekoppelt und wird von dieser angetrieben. Die Dachspitze wiederum ist über einen Lenkermechanismus kinematisch an die Hauptschere gekoppelt. Der hinter der Dachspitze angeordnete Flächenspriegel ist dabei fest mit einem Lenker verbunden, welcher zur Bewegung der Dachspitze zwischen ihrer Position bei geschlossenem Verdeck und ihrer Position bei offenem Verdeck vorgesehen ist. Ein in geschlossener Verdeckposition in Verdecklängsrichtung hinterster Flächenspriegel ist über jeweils einen Lenker an die Lenker der Hauptschere angebunden, wobei eine Bewegung des hintersten Flächenspriegels über eine Steuerstange gesteuert wird.

Zur Bewegung sämtlicher Dachteile zwischen ihrer jeweiligen Position bei geschlossenem Verdeck und ihrer Position bei offenem Verdeck sind viele Lenker erforderlich, wodurch ein großes Gewicht des Verdecks und eine große Komplexität der Bewegung der Dachteile verursacht werden.

Ein Soft-Top-Verdeck mit einem ähnlichen Aufbau ist aus der DE 10 2007 051 120 B3 bekannt.

Es ist Aufgabe der vorliegenden Erfindung, ein Soft-Top-Verdeck eines Cabriolet-Fahrzeugs der eingangs genannten Art zu schaffen, bei welchem eine Anzahl von erforderlichen Lenkern zur Bewegung sämtlicher Dachteile minimiert ist.

Diese Aufgabe wird mit einem Soft-Top-Verdeck gemäß den Merkmalen des Patentanspruches 1 gelöst.

Es wird somit ein Soft-Top-Verdeck eines Cabriolet-Fahrzeugs mit einem flexiblen Verdeckbezug vorgeschlagen, welches mittels eines Verdeckgestänges zwischen einer einen Fahrgastraum abdeckenden geschlossenen Position und einer den Fahrgastraum zumindest teilweise freigebenden offenen Position verlagerbar ist, mit mehreren in geschlossener Verdeckposition hinter einer Dachspitze angeordneten, wenigstens annähernd eine Breite des Verdecks überspannenden Dachelementen und in geschlossener Verdeckposition jeweils seitlich neben den Dachelementen angeordneten seitlichen Dachrahmenelementen, wobei zur Überführung des Verdecks zwischen der geschlossenen und der offenen Position ein Hauptlenkersystem des Verdeckgestänges mit einem seitlichen Dachrahmenelement oder einem Dachelement verbunden ist und die Dachspitze unter Zwischenschaltung mehrerer Lenker des Verdeckgestänges mit dem Hauptlenkersystem zusammenwirkt.

Erfindungsgemäß ist vorgesehen, dass wenigstens zwei Dachelemente fest mit jeweils einem Lenker des Verdeckgestänges, welche jeweils zur Umsetzung einer Bewegung eines anderen Dachelements oder seitlichen Dachrahmenelements erforderlich ist, verbunden sind.

Die fest mit den Lenkern verbundenen Dachelemente sind gegenüber diesen Lenkern nicht beweglich und können auf einfache Weise an den jeweiligen Lenkern angebunden werden.

Die Anzahl der zur Bewegung sämtlicher Dachteile erforderlichen Lenker ist bei einem erfindungsgemäßen Soft-Top-Verdeck sehr gering, da durch die Kopplung von Dachelementen an zur Bewegung von anderen Dachelementen bzw. seitlichen Dachrahmenelementen separate Lenker zur Anbindung und Bewegung der Dachelemente entfallen können. Das Gewicht eines erfindungsgemäßen Verdecks ist somit vorteilhafterweise sehr gering. Durch die geringe Anzahl von insgesamt benötigten Lenkern ist auch eine Komplexität einer Verdeckbewegung sehr einfach ausgeführt und ein von dem Verdeck in seiner abgelegten Position benötigter Bauraum sehr gering.

Bei einer konstruktiv einfachen Ausführung eines erfindungsgemäßen Soft-Top-Verdecks ist es vorgesehen, dass ein in geschlossener Verdeckposition in Verdecklängsrichtung hinter der Dachspitze angeordnetes Dachelement und ein in geschlossener Verdeckposition hinter diesem Dachelement angeordnetes weiteres Dachelement jeweils fest mit einem Lenker des Verdeckgestänges, welche jeweils zur Umsetzung einer Bewegung eines anderen Dachelements oder seitlichen Dachrahmenelements erforderlich sind, verbunden sind.

Wenn wenigstens zwei Lenker, welche zur Überführungsbewegung der seitlichen Dachrahmenelemente zwischen ihrer Position bei geschlossenem Verdeck und ihrer Position bei offenem Verdeck vorgesehen sind, fest mit einem Dachelement verbunden sind, ist die Dachspitze über die seitlichen Dachrahmenelemente kinematisch geführt und die jeweiligen Dachelemente können fest mit den für die Bewegung der seitlichen Dachrahmenelemente benötigten Lenkern verbunden werden.

Neben der Dachspitze können bei einer eine in geschlossener Verdeckposition eine große Länge in Verdecklängsrichtung überspannenden Ausführung und/oder eine geringe Länge in einem heckseitigen Stauraum aufweisenden Ausführung wenigstens drei in geschlossener Verdeckposition in Verdecklängsrichtung hintereinander angeordnete Dachelemente und insbesondere auf jeder Verdeckseite wenigstens vier seitliche Dachrahmenelemente vorgesehen sein. Unter Dachelementen werden im Rahmen dieser Anmeldung die Dachspitze und die in geschlossener Verdeckposition hinter der Dachspitze und vor einem die Heckscheibe umfassenden Heckscheibenelement angeordneten Verdeckelemente verstanden.

Die seitlichen Dachrahmenelemente sind bei einer hinsichtlich einer Flexibilität der Verdeckbewegung vorteilhaften Ausführung zumindest teilweise unabhängig von den Dachelementen zwischen ihrer Position bei geschlossenem Verdeck und ihrer Position bei offenem Verdeck verlagerbar. Dabei können einzelne seitliche Dachrahmenteile auch integral mit einem Dachelement, beispielsweise einer Dachspitze, oder einem Lenker, beispielsweise einem Lenker des Hauptlenkersystems, ausgeführt sein.

Zumindest drei in geschlossener Verdeckposition in Verdecklängsrichtung hintereinander angeordnete seitliche Dachrahmenelemente können bei einer einfach umzusetzenden Ausführung der Erfindung in einer Z-förmigen Bewegung zwischen ihrer Position bei geschlossenem Verdeck und ihrer Position bei offenem Verdeck verlagerbar sein.

Bei einer konstruktiv einfachen Ausführung eines erfindungsgemäßen Soft-Top-Verdecks ist zur Überführung des Verdecks zwischen der geschlossenen und der offenen Position das in geschlossener Verdeckposition in Verdecklängsrichtung dritte seitliche Dachrahmenelement von vorne an das Hauptlenkersystem angebunden und bildet insbesondere mit dem Hauptlager und zwei Lenkern des Hauptlenkersystems ein Viergelenk.

Das in geschlossener Verdeckposition in Verdecklängsrichtung zweite Dachelement hinter der Dachspitze kann bei einer konstruktiv einfachen Ausführung der Erfindung fest mit einem Führungslenker verbunden sein, welcher an einem vorderen Ende insbesondere über ein Vorgelege mit einem in geschlossener Verdeckposition zweiten und dritten seitlichen Dachrahmenelement von vorne und hinten an einem Lenker des Hauptlenkersystems angelenkt ist.

Das in geschlossener Verdeckposition in Verdecklängsrichtung hinter der Dachspitze angeordnete Dachelement ist bei einer vorteilhaften Ausführung der Erfindung über einen fest mit diesem Dachelement verbundenen Lenker und einen Steuerlenker an einem in geschlossener Verdeckposition in Verdecklängsrichtung zweiten und dritten seitlichen Dachrahmenelement von vorne angelenkt. Dieses Dachelement bildet somit mit dem zweiten und dritten seitlichen Dachrahmenelement und dem Steuerlenker einen Viergelenkmechanismus bzw. ist über einen Zweischlag mit dem zweiten und dritten seitlichen Dachrahmenelement verbunden.

Eine Ankopplung der Dachspitze an die Dachelemente kann auf einfache Weise dadurch geschaffen werden, dass die Dachspitze an einem in geschlossener Verdeckposition in Verdecklängsrichtung zweiten seitlichen Dachrahmenelement von vorne angelenkt ist und mittels eines weiteren Steuerlenkers mit einem fest mit dem in geschlossener Verdeckposition in Verdecklängsrichtung hinter der Dachspitze angeordneten Dachelement verbundenen Lenker gekoppelt ist, wobei dieser Lenker gelenkig mit dem zweiten seitlichen Dachrahmenelement verbunden ist. Zudem kann eine Länge der Dachspitze und des in geschlossener Verdeckposition in Verdecklängsrichtung hinter der Dachspitze angeordneten Dachelements derart aufeinander abgestimmt sein, dass das hinter der Dachspitze angeordnete Dachelement in offener Verdeckposition in gleicher Orientierung unterhalb der Dachspitze und gegenüber dieser derart heckwärts verlagert ist, dass ein beispielsweise für die Anordnung eines Verriegelungsmechanismus der Dachspitze vorgesehener Bauraum der Dachspitze durch das in geschlossener Verdeckposition hinter der Dachspitze angeordnete Dachelement nicht beeinträchtigt ist.

Bei einer vorteilhaften Ausführung der Erfindung kann ein in geschlossener Verdeckposition in Verdecklängsrichtung hinterstes Dachelement über einen ersten Lenker an dem Hauptlager angebunden und über einen weiteren Lenker mit dem Führungslenker verbunden sein, wobei zur Steuerung einer Bewegung des hintersten Dachelements vorzugsweise ein Steuerlenker vorgesehen ist. Das hinterste Dachelement grenzt in geschlossener Verdeckposition in Verdecklängsrichtung insbesondere wenigstens annähernd an ein eine Heckscheibe umfassendes Heckscheibenelement an.

Der Steuerlenker des hintersten Dachelements kann dabei einerseits mit dem weiteren Lenker und andererseits mit dem in geschlossener Verdeckposition in Verdecklängsrichtung dritten seitlichen Dachrahmenelement oder dem Steuerlenker des in geschlossener Verdeckposition in Verdecklängsrichtung hinter der Dachspitze angeordneten Dachelements verbunden sein.

Bei einer besonders vorteilhaften Ausführung der Erfindung sind die Dachelemente als Flächenspriegel ausgebildet. Die Dachelemente weisen hierbei in Verdecklängsrichtung eine entsprechend große Länge zur Stützung des Verdeckbezugs auf und prägen dem Verdeckbezug in geschlossener Verdeckposition eine äußere Form bzw. Dachkontur auf. Die formgebenden Dachelemente weisen in Verdecklängsrichtung insbesondere eine Länge größer 150 mm auf, können aber eine voneinander unterschiedliche Erstreckung in Verdecklängsrichtung haben, wobei die Dachelemente in geschlossener Verdeckposition vorzugsweise mit relativ geringen Zwischenräumen aneinander grenzen. Es kann auch vorgesehen sein, dass zwischen benachbarten Dachelementen in geschlossener Verdeckposition keine Zwischenräume vorliegen, diese somit aneinander grenzen oder zumindest teilweise überlappen.

In offener Verdeckposition nehmen die Dachelemente bei einer einen geringen Stauraum benötigenden Ausführung alle die gleiche Orientierung wie in geschlossener Verdeckposition ein.

Bei einer vorteilhaften Ausführung eines erfindungsgemäßen Soft-Top-Verdecks ist ein die Dachelemente zumindest teilweise von einer Innenseite verkleidender Innenhimmel vorgesehen, welcher zumindest im Bereich eines in geschlossener Verdeckposition in Verdecklängsrichtung zweiten Dachelements von vorne angebunden ist. Insbesondere bei einem neben der Dachspitze drei Dachelemente aufweisenden Verdeck kann hierdurch auf einfache Weise verhindert werden, dass der Innenhimmel bei einer Verdecköffnungsbewegung oder einer Verdeckschließbewegung in den Fahrgastraum eingreift und beispielsweise in Kontakt mit im Fondbereich eines Cabriolet-Fahrzeugs befindlichen Personen kommt.

Sowohl die in den Patentansprüchen angegebenen Merkmale als auch die in dem nachfolgenden Ausführungsbeispiel des erfindungsgemäßen Soft-Top-Verdecks angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Weitere Vorteile und vorteilhafte Ausführungsformen des erfindungsgemäßen Soft-Top-Verdecks ergeben sich aus den Patentansprüchen und dem nachfolgend unter Bezugnahme auf die Zeichnung prinzipmäßig beschriebenen Ausführungsbeispiel.

Es zeigt:
- Fig. 1: eine vereinfacht dargestellte dreidimensionale Ansicht eines Soft-Top-Verdecks eines Cabriolet-Fahrzeugs in einer geschlossenen Position, wobei ein Verdeckbezug des Verdecks der besseren Übersichtlichkeit halber halbtransparent dargestellt ist;
- Fig. 2: eine vereinfachte Seitenansicht des Verdecks der Fig. 1 in geschlossener Position, wobei der Verdeckbezug nicht gezeigt ist;
- Fig. 3: eine vereinfachte Ansicht des Verdecks der Fig. 1 und 2 in geschlossener Position, wobei das Verdeck von einer Verdecklängsmittelebene in Richtung einer linken Verdeckseite betrachtet gezeigt ist;
- Fig. 4: eine vereinfachte dreidimensionale Ansicht eines Ausschnitts des Verdecks der Fig. 1 bis 3 in der geschlossenen Position, wobei eine linke Seite des Verdecks von innen unten aus betrachtet gezeigt ist;
- Fig. 5: eine vereinfachte, der Fig. 2 entsprechende Darstellung des Verdecks der Fig. 1 bis 4, wobei ein Stoffhaltebügel des Verdecks in einer aufgeschwenkten Position ersichtlich ist;
- Fig. 6: eine vereinfachte Seitenansicht des Verdecks der Fig. 1 bis 5 in einer teilweise geöffneten Position;
- Fig. 7: eine vereinfachte Seitenansicht des Verdeck der Fig. 1 bis 6 in einer gegenüber der Ansicht der Fig. 6 weiter Richtung vollständig geöffneter Position verlagerten Zwischenposition;
- Fig. 8: eine vereinfachte Ansicht des Verdecks der Fig. 1 bis 7 in einer der Fig. 7 entsprechenden Position, wobei das Verdeck von einer Verdecklängsmittelebene in Richtung einer linken Verdeckseite betrachtet gezeigt ist;
- Fig. 9: eine vereinfachte dreidimensionale Ansicht des Verdecks der Fig. 1 bis 8 in einer offenen Position;
- Fig. 10: eine vereinfachte Seitenansicht des Verdecks der Fig. 1 bis 9 in der offenen Position;
- Fig. 11: eine vereinfachte Ansicht des Verdecks der Fig. 1 bis 10 in der offenen Position, wobei das Verdeck entlang einer Verdecklängsmittelebene aufgeschnitten und in Richtung einer linken Verdeckseite betrachtet gezeigt ist; und
- Fig. 12: eine stark schematisierte Schnittansicht des Verdecks der Fig. 1 bis 11, wobei das Verdeck in einer Zwischenposition ersichtlich ist und sowohl ein Verdeckbezug als auch ein Innenhimmel vereinfacht gezeigt sind.

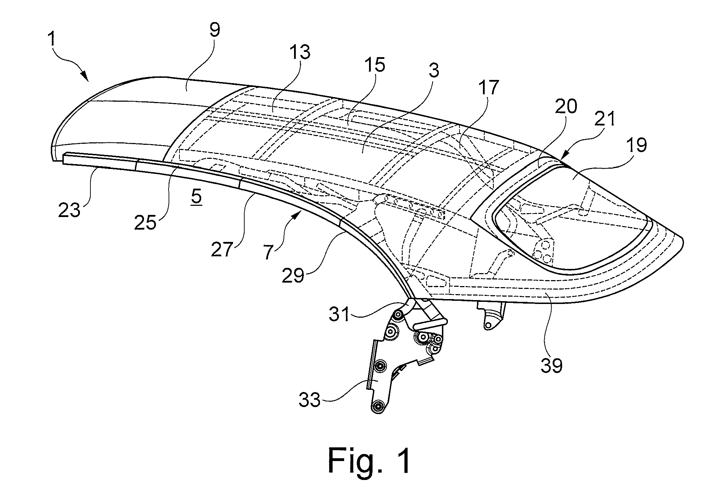

In Fig. 1 ist ein vereinfacht dargestelltes Soft-Top-Verdeck 1 eines Cabriolet-Fahrzeugs in geschlossener Position gezeigt, welches einen in Fig. 1 halbtransparent dargestellten flexiblen Verdeckbezug 3 aufweist. Der Verdeckbezug 3 erstreckt sich hier in Verdecklängsrichtung von einem Stoffhaltebügel 39 bis zu einem hinteren Ende der Dachspitze 9. Alternativ hierzu kann sich der Verdeckbezug beispielsweise auch bis zu einem vorderen Ende der Dachspitze erstrecken.

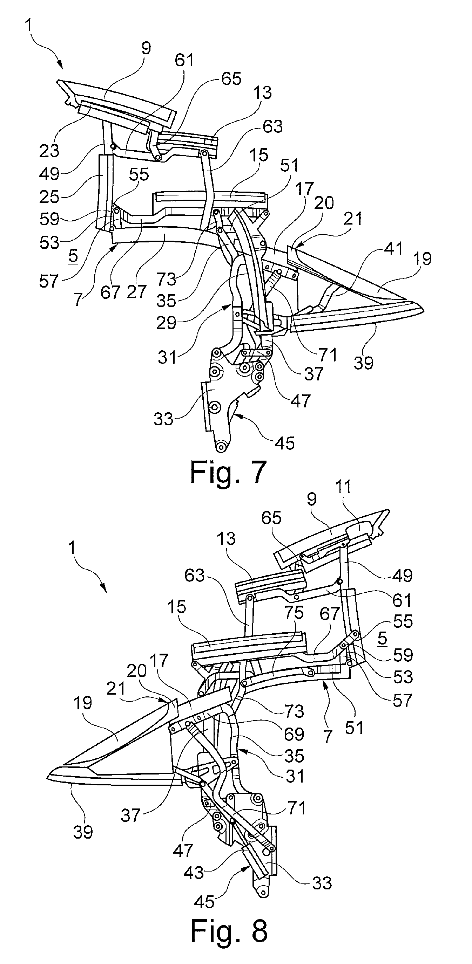

Das Verdeck 1 ist mittels eines Verdeckgestänges 7 zwischen der in der Fig. 1 gezeigten einen Fahrgastraum 5 abdeckenden, geschlossenen Position und einer beispielsweise in der Fig. 8 gezeigten, den Fahrgastraum 5 freigebenden, offenen Position verlagerbar.

Das Verdeck 1 weist eine Dachspitze 9 auf, welche insbesondere mit einer zur Festlegung an einem Windschutzscheibenrahmen des Cabriolet-Fahrzeugs vorgesehenen Verriegelungseinrichtung 11 ausgebildet ist. In geschlossener Verdeckposition in Verdecklängsrichtung heckwärts an die Dachspitze 9 schließen sich vorliegend drei eine Verdeckbreite im Wesentlichen überspannende, Dachelemente 13, 15 und 17 an. Die Dachelemente 13, 15, 17 werden zur einfacheren Bezeichnung im Folgenden durchnummeriert, wobei das in geschlossener Verdeckposition hinter der Dachspitze 9 angeordnete Dachelement als erstes Dachelement 13 bezeichnet wird und die folgenden Dachelemente als zweites Dachelement 15 und drittes Dachelement 17.

Die Dachspitze 9 und die Dachelemente 13, 15, 17 sind hier als Flächenspriegel ausgebildet und weisen eine relativ große Erstreckung in Verdecklängsrichtung auf. Die Dachelemente 13, 15 und 17 grenzen in geschlossener Verdeckposition annähernd aneinander und stützen den Verdeckbezug 3 nahezu vollflächig ab und prägen diesem eine äußere Form bzw. Dachkontur auf. In Verdecklängsrichtung vorgesehene Zwischenräume zwischen den einzelnen Dachelementen 13, 15, 17, zwischen dem ersten Dachelement 13 und der Dachspitze 9 und zwischen dem dritten Dachelement 17 und einem heckwärts des hintersten dritten Dachelements 17 angeordneten, eine Heckscheibe 19 umfassenden Heckscheibenelements 21 sind hier sehr klein ausgeführt, um den Verdeckbezug 3 über nahezu seine gesamte Längserstreckung abzustützen und zu formen.

Eine Länge der Dachelemente 13, 15 und 17 und der Dachspitze 9 in Verdecklängsrichtung ist entsprechend des jeweiligen Anwendungsfalls sehr variabel wählbar und kann sich für die einzelnen Elemente 9, 13, 15, 17 auch voneinander unterscheiden.

In Verdeckquerrichtung seitlich an die Dachspitze 9 und die Dachelemente 13, 15, 17 schließen hier beidseits jeweils vier seitliche Dachrahmenelemente 23, 25, 27, 29 an, wobei in der geschlossenen Position des Verdecks 1 in Verdecklängsrichtung jeweils zwei benachbarte seitliche Dachrahmenelemente 23, 25, 27, 29 direkt aneinander grenzen.

Das in Verdeckfrontrichtung vorderste, hier integral mit der Dachspitze 9 ausgeführte, seitliche Dachrahmenelement wird im Folgenden als erstes seitliches Dachrahmenelement 23 und die heckwärts folgenden seitlichen Dachrahmenelemente als zweites seitliches Dachrahmenelement 25, drittes seitliches Dachrahmenelement 27 und viertes seitliches Dachrahmenelement 29 bezeichnet. Das vierte seitliche Dachrahmenelement 29 ist hier integral mit der Hauptsäule 37 verbunden.

Es ist ein Hauptlenkersystem 31 bzw. eine Hauptschere mit jeweils an einem Hauptlager 33 angelenkten Hauptlenker 35 und Hauptsäule 37 vorgesehen, wobei der Hauptlenker 35 und die Hauptsäule 37 vorliegend mit dem dritten seitlichen Dachrahmenelement 27 verbunden sind und zusammen mit dem Hauptlager 33 ein Viergelenk bilden. Eine Verdeckbewegung wird vorliegend über eine mit einem Hydraulikzylinder 43 ausgeführte Antriebseinrichtung 45 bewirkt, welcher hier einerseits an dem Hauptlager 33 und andererseits an einem mit dem Hauptlager 33 und einem Stoffhaltebügel 39 verbundenen Kniehebelmechanismus 47 angelenkt ist.

Zur Überführung des Verdecks 1 zwischen der geschlossenen Position und der offenen Position wird das dritte seitliche Dachrahmenelement 27 von der Antriebseinrichtung 47 bewegt, wobei die Dachspitze 9, die Dachelemente 13, 15, 17 und die seitlichen Dachrahmenelemente 23, 25, 27, 29 hierbei über im Folgenden näher beschriebene Lenker, zwischen ihrer Position bei geschlossenem Verdeck 1 und ihrer Position bei offenem Verdeck 1 verlagert werden.

Das in geschlossener Verdeckposition heckwärts an das integral mit der Dachspitze 9 ausgebildete erste seitliche Dachrahmenelement 23 anschließende zweite seitliche Dachrahmenelement 25 ist fest mit einem ersten Lenker 49 verbunden, welcher einerseits gelenkig mit der Dachspitze 9 verbunden ist und andernends gelenkig an einen zweiten Lenker 51 gekoppelt ist, welcher wiederum fest mit dem dritten seitlichen Dachrahmenelement 27 verbunden ist. Der erste Lenker 49 und der zweite Lenker 51 sind zudem über ein Vorgelege 53 mit zwei Hebeln 55, 57 verbunden, wobei ein erster Hebel 55 gelenkig mit dem ersten Lenker 49 und ein zweiter Lenker 57 gelenkig mit dem zweiten Lenker 51 verbunden sind. An ihrem dem jeweiligen Lenker 49, 51 abgewandten Ende sind die beiden Hebel 55, 57 über einen Gelenkpunkt 59 miteinander verbunden. Zusammen mit dem ersten Lenker 49 und dem zweiten Lenker 51 bildet das Vorgelege 53 ein Viergelenk.

Das erste Dachelement 13 ist fest mit einem dritten Lenker 61 verbunden, welcher zusammen mit einem ersten Steuerlenker 63 einen Zweischlag bildet. Der dritte Lenker 61 ist hierbei gelenkig mit dem ersten Lenker 49 verbunden, wobei sich ein Gelenkpunkt des ersten Lenkers 49 mit dem dritten Lenker 61 zwischen einem Gelenkpunkt des ersten Lenkers 49 mit der Dachspitze 9 und einem Gelenkpunkt des ersten Lenkers 49 mit dem zweiten Lenker 51 befindet. Der erste Steuerlenker 63 erstreckt sich jeweils gelenkig angebunden zwischen dem dritten Lenker 61 und dem zweiten Lenker 51. Der erste Lenker 49, der zweite Lenker 51, der dritte Lenker 61 und der erste Steuerlenker 63 bilden hierbei ein Viergelenk.

Die Dachspitze 9 und das integral mit dieser ausgeführte erste seitliche Dachrahmenelement 23 sind wiederum über ein Viergelenk in die Verdeckkinematik eingebunden. Die Lenker dieses Viergelenks werden von der Dachspitze 9 bzw. dem ersten seitlichen Dachrahmenelement 23, dem ersten Lenker 49, dem dritten Lenker 61 und einem zweiten Steuerlenker 65 gebildet, welcher ein heckseitiges Ende der Dachspitze 9 mit dem dritten Lenker 61 verbindet. Ein Verbindungspunkt des zweiten Steuerlenkers 65 mit dem dritten Lenker 61 befindet sich vorliegend etwa mittig zwischen einem Gelenkpunkt des ersten Lenkers 49 mit dem dritten Lenker 61 und einem Gelenkpunkt des dritten Lenkers 61 mit dem ersten Steuerlenker 63.

Das zweite Dachelement 15 ist fest mit einem vierten, einen Führungslenker darstellenden Lenker 67 verbunden, welcher einenends an dem Gelenkpunkt 59 des Vorgeleges 53 und andernends an der Hauptsäule 37 angelenkt ist.

Sowohl der dritte, fest mit dem ersten Dachelement 13 verbundene Lenker 61 als auch der vierte, fest mit dem zweiten Dachelement 15 verbundene Lenker 67 sind zur Umsetzung der Bewegung anderer Dachelemente bzw. seitlicher Dachrahmenelemente d. h. für deren kinematische Anbindung erforderlich, so dass für die Anbindung des ersten Dachelements 13 und des zweiten Dachelements 15 keine separaten Lenker, welche lediglich zur Anbindung des jeweiligen Dachelements 13, 15 vorgesehen sind, benötigt werden. Durch die vorgeschlagene Ausführung wird vorteilhafterweise die Torsionssteifigkeit des Verdecks 1 erhöht. Die integrale Ausführung des ersten Dachelements 13 mit dem dritten Lenker 61 hat zudem den Vorteil, dass hierdurch auf eine Führung der Dachspitze 9 über ein nahezu paralleles Viergelenk verzichtet werden kann, welches schlechtere kinematische Parameter, wie Winkel und Abstände, gegenüber der vorgeschlagenen Ausführung aufweisen würde.

Das dritte Dachelement 17 wiederum ist fest mit einem fünften Lenker 69 verbunden, welcher in einem heckseitigen Bereich gelenkig mit einem sechsten Lenker 71 verbunden ist, welcher an seinem dem fünften Lenker 69 abgewandten Ende an dem Hauptlager 33 angelenkt ist. In einem frontseitigen Bereich ist der fünfte Lenker 69 über einen siebten Lenker 73 mit dem vierten Lenker 67 verbunden. Da der fünfte Lenker 69 hierdurch allerdings noch kinematisch unbestimmt gelagert ist, ist ein dritter Steuerlenker 75 vorgesehen, welcher den siebten Lenker 73 mit dem zweiten Lenker 51 koppelt.

Im Unterschied zu dem dritten Lenker 61 und dem vierten Lenker 67 ist der fünfte Lenker 69 nicht zur Bewegung eines anderen Dachelements oder seitlichen Dachrahmenelements erforderlich, sondern dient lediglich der Anbindung des dritten Dachelements 17 an die Verdeckkinematik.

In geschlossener Position des Verdecks 1 ist im Wesentlichen horizontal heckwärts des Hauptlagers 33 der Stoffhaltebügel 39 an das Verdeckgestänge 7 angebunden. Der Stoffhaltebügel 39 wirkt hier über einen Kniehebel 41 mit dem Heckscheibenelement 21 zusammen, wobei das Heckscheibenelement 21 die Heckscheibe 19 und einen Heckscheibenrahmen 20 umfasst. Um den Stoffhaltebügel 39 zur Öffnung eines Verdeckkastendeckels aufzuschwenken, wird der Stoffhaltebügel von der Antriebseinrichtung 45 über den Kniehebelmechanismus 47 bewegt.

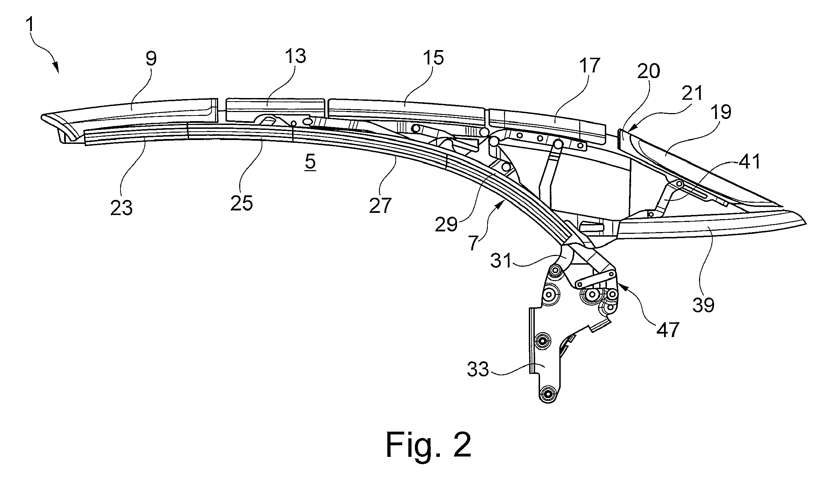

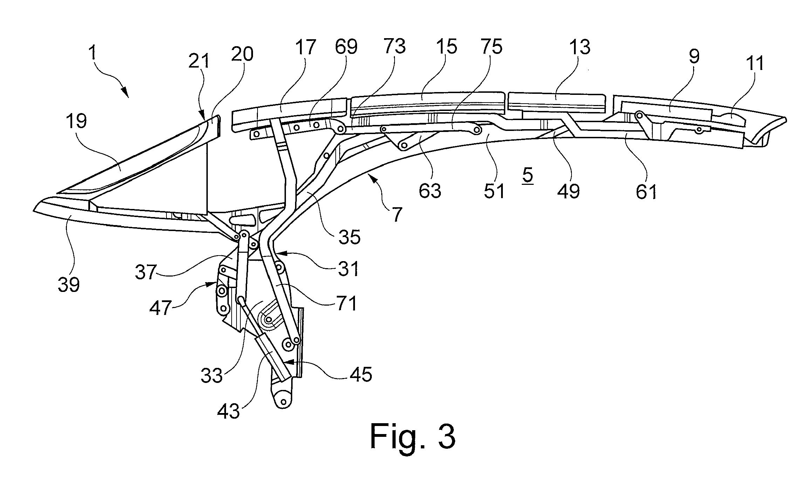

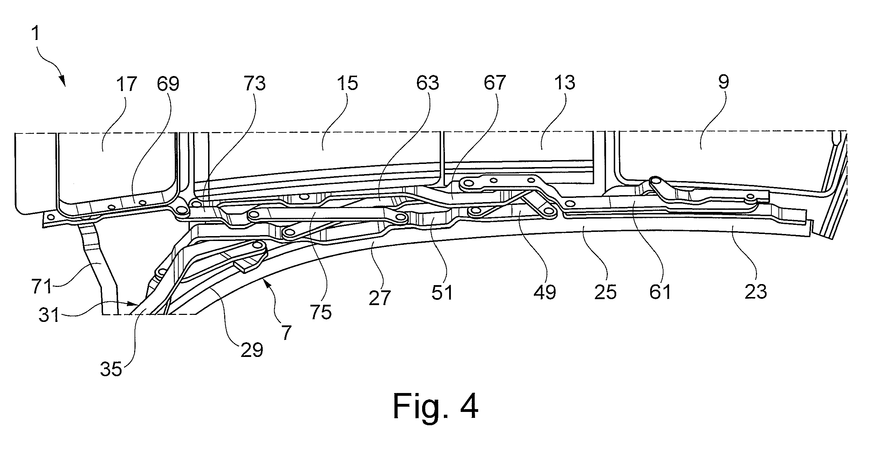

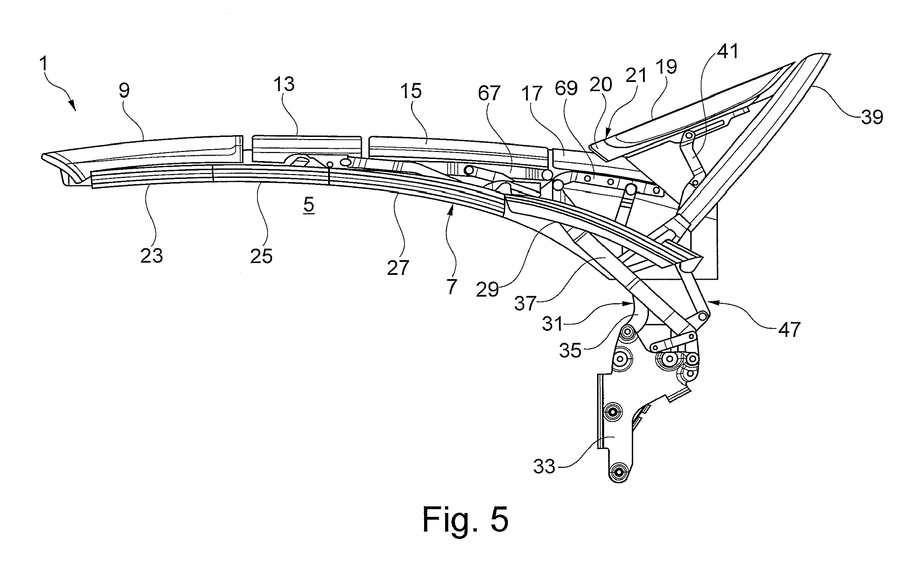

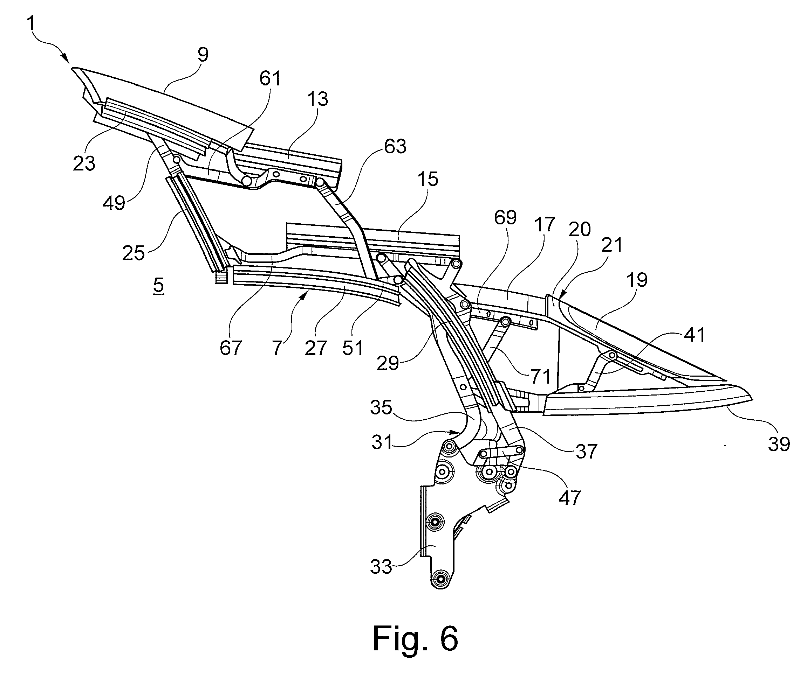

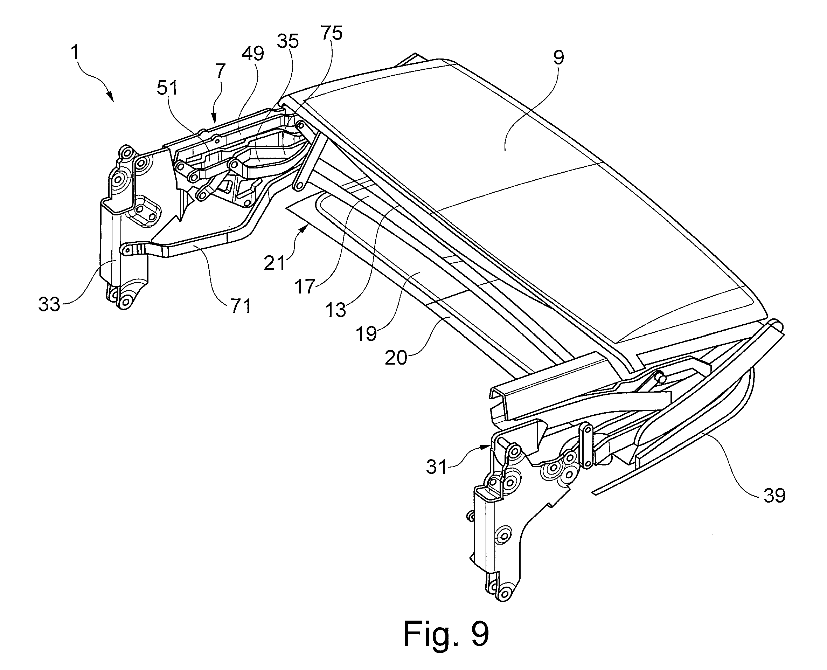

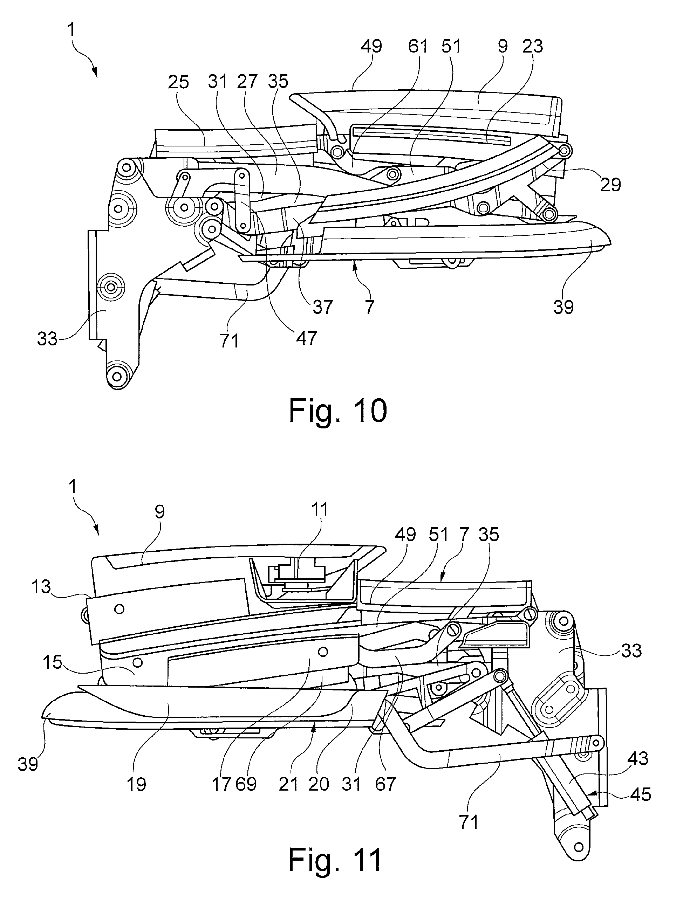

Nach einer Öffnung des Verdeckkastendeckels kann das Verdeck 1 ausgehend von der in den Fig. 1 bis 4 gezeigten geschlossenen Position mittels der Antriebseinrichtung 45 über die in den Fig. 5 bis 8 gezeigten Zwischenpositionen in seine in einem heckseitigen Ablageraum befindliche abgelegte Position verlagert werden, wie in den Fig. 9 bis 11 gezeigt.

Sowohl die Dachspitze 9 als auch die Dachelemente 13, 15, 17 werden hierbei in gleicher Orientierung abgelegt, so dass diese Bauteile 9, 13, 15, 17 in abgelegter Position in Verdeckhochrichtung sehr nah aneinander angeordnet werden können.

Bei der gezeigten Ausführung ist das erste Dachelement 13 gegenüber der Dachspitze 9 in Verdecklängsrichtung verkürzt ausgebildet, so dass es in der abgelegten Position heckwärts eines für die Verriegelungsvorrichtung vorgesehenen Bauraums der Dachspitze 9 bauraumgünstig anordenbar ist.

Zudem ist das dritte Dachelement 17 gegenüber der Dachspitze 9 und dem zweiten Dachelement 15, welche hier eine etwa vergleichbare Länge in Verdecklängsrichtung aufweisen, in seiner Länge in Verdecklängsrichtung verkürzt, wobei ein in geschlossener Verdeckposition vorderes Ende des dritten Dachelements 17 im Wesentlichen in gleicher Position in Fahrzeuglängsrichtung wie ein in geschlossener Verdeckposition vorderes Ende der Dachspitze 9 und ein vorderes Ende des zweiten Dachelements 15 angeordnet ist. Hierdurch wird verhindert, dass das dritte Dachelement 17 in Ablageposition in Verdeckquerrichtung in Kontakt mit dem Stoffhaltebügel 39 kommt. Ebenso können bei alternativen Ausführungen der Erfindung die Längen sämtlicher Dachelemente 13, 15, 17 an die bauräumlichen Gegebenheiten angepasst sein und sich dementsprechend voneinander unterscheiden.

Abgesehen von dem ersten, integral mit der Dachspitze 9 ausgeführten seitlichen Dachrahmenelement 23, sind die weiteren seitlichen Dachrahmenelemente 25, 27, 29 unabhängig, d. h. nicht an die entsprechenden Dachelemente 13, 15, 17 gekoppelt, zwischen ihrer Position bei geschlossenem Verdeck 1 und ihrer Position bei offenem Verdeck 1 verlagerbar. Die Bewegung von jeweils drei hintereinander angeordneten seitlichen Dachrahmenelementen 23, 25, 27, 29 bei einer Verdecköffnungs- bzw. Verdeckschließbewegung ist hier Z-förmig, d. h. jeweils zwei in geschlossener Verdeckposition benachbarte seitliche Dachrahmenelemente 23, 25, 27, 29 werden bei einer Verdecköffnungsbewegung gegensinnig zueinander verschwenkt.

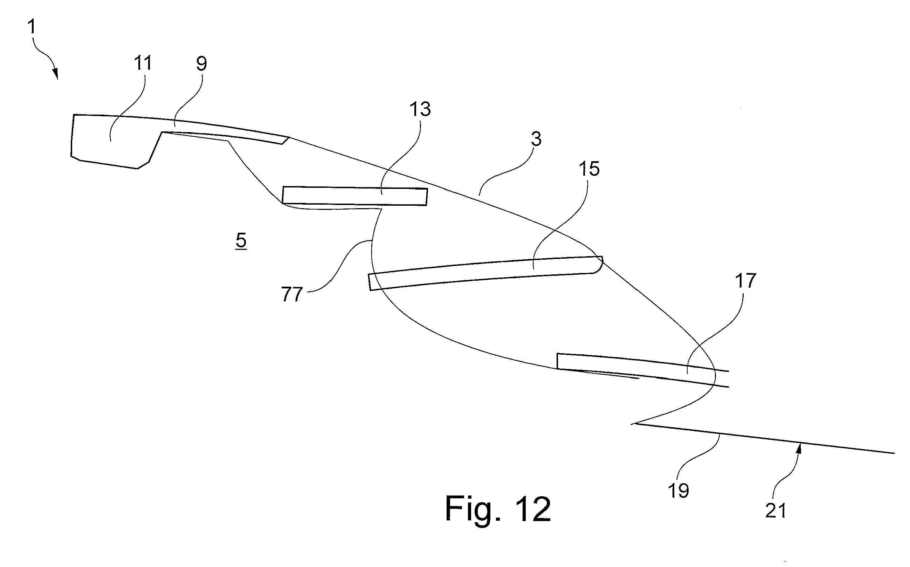

An einer in geschlossener Verdeckposition dem Fahrgastraum 5 zugewandten Seite der Dachelemente 9, 13, 15, 17 ist, wie in Fig. 12 näher ersichtlich ist, ein Innenhimmel 77 angeordnet, welcher neben seiner Anbindung an die Dachspitze 9 einen Anbindungspunkt an dem ersten Dachelement 13 aufweist. Hierdurch kann auf einfache Weise sichergestellt werden, dass der Innenhimmel 77 bei einer Verdecköffnungs - bzw. Verdeckschließbewegung definiert über sich in einem Fondbereich des Cabriolet-Fahrzeugs befindlichen Personen bewegt wird.

## Patentansprüche

1. Soft-Top-Verdeck (1) eines Cabriolet-Fahrzeugs mit einem flexiblen Verdeckbezug (3), welches mittels eines Verdeckgestänges (7) zwischen einer einen Fahrgastraum (5) abdeckenden geschlossenen Position und einer den Fahrgastraum (5) zumindest teilweise freigebenden offenen Position verlagerbar ist, mit mehreren in geschlossener Verdeckposition hinter einer Dachspitze (9) angeordneten, wenigstens annähernd eine Breite des Verdecks (1) überspannenden Dachelementen (13, 15, 17) und in geschlossener Verdeckposition jeweils seitlich neben den Dachelementen (9, 13, 15, 17) angeordneten seitlichen Dachrahmenelementen (23, 25, 27, 29), wobei zur Überführung des Verdecks (1) zwischen der geschlossenen und der offenen Position ein Hauptlenkersystem (31) des Verdeckgestänges (7) mit einem seitlichen Dachrahmenelement (23, 25, 27, 29) oder einem Dachelement (13, 15, 17) verbunden ist und die Dachspitze (9) unter Zwischenschaltung mehrerer Lenker (49, 51, 53, 55, 57, 61, 63, 65, 67) des Verdeckgestänges (7) mit dem Hauptlenkersystem (31) zusammenwirkt,
**dadurch gekennzeichnet,**
**dass** wenigstens zwei Dachelemente (13 ,15) fest mit jeweils einem Lenker (61, 67) des Verdeckgestänges (7), welche jeweils zur Umsetzung einer Bewegung eines anderen Dachelements (9, 13, 15, 17) oder seitlichen Dachrahmenelements (23, 25, 27, 29) erforderlich sind, verbunden sind.

2. Verdeck nach Anspruch 1,
**dadurch gekennzeichnet,**
**dass** ein in geschlossener Verdeckposition in Verdecklängsrichtung hinter der Dachspitze (9) angeordnetes Dachelement (13) und ein in geschlossener Verdeckposition hinter diesem Dachelement (13) angeordnetes weiteres Dachelement (15) jeweils fest mit einem Lenker (61, 67) des Verdeckgestänges (7), welche jeweils zur Umsetzung einer Bewegung eines anderen Dachelements (9, 13, 15, 17) oder seitlichen Dachrahmenelements (23, 25, 27, 29) erforderlich sind, verbunden sind.

3. Verdeck nach einem der Ansprüche 1 oder 2,
**dadurch gekennzeichnet,**
**dass** wenigstens zwei Lenker (61, 67), welche zur Überführungsbewegung der seitlichen Dachrahmenelemente (23, 25, 27, 29) zwischen ihrer Position bei geschlossenem Verdeck (1) und ihrer Position bei offenem Verdeck (1) vorgesehen sind, fest mit einem Dachelement (13, 15 ,17) verbunden sind.

4. Verdeck nach einem der Ansprüche 1 bis 3,
**dadurch gekennzeichnet,**
**dass** neben der Dachspitze (9) wenigstens drei in geschlossener Verdeckposition in Verdecklängsrichtung hintereinander angeordnete Dachelemente (13, 15 ,17) und insbesondere auf jeder Verdeckseite wenigstens vier seitliche Dachrahmenelemente (23, 25, 27, 29) vorgesehen sind.

5. Verdeck nach einem der Ansprüche 1 bis 4,
**dadurch gekennzeichnet,**
**dass** die seitlichen Dachrahmenelemente (23, 25 ,27, 29) zumindest teilweise unabhängig von den Dachelementen (9, 13, 15 ,17) zwischen ihrer Position bei geschlossenem Verdeck (1) und ihrer Position bei offenem Verdeck (1) verlagerbar sind.

6. Verdeck nach einem der Ansprüche 1 bis 5,
**dadurch gekennzeichnet,**
**dass** zumindest drei in geschlossener Verdeckposition in Verdecklängsrichtung hintereinander angeordnete seitliche Dachrahmenelemente (23, 25 ,27, 29) in einer Z-förmigen Bewegung zwischen ihrer Position bei geschlossenem Verdeck (1) und ihrer Position bei offenem Verdeck (1) verlagerbar sind.

7. Verdeck nach einem der Ansprüche 1 bis 6,
**dadurch gekennzeichnet,**
**dass** zur Überführung des Verdecks (1) zwischen der geschlossenen und der offenen Position das in geschlossener Verdeckposition in Verdecklängsrichtung dritte seitliche Dachrahmenelement (27) von vorne an das Hauptlenkersystem (31) angebunden ist.

8. Verdeck nach einem der Ansprüche 1 bis 7,
**dadurch gekennzeichnet,**
**dass** das in geschlossener Verdeckposition in Verdecklängsrichtung zweite Dachelement (15) hinter der Dachspitze (9) fest mit einem Führungslenker (67) verbunden ist, welcher an einem vorderen Ende insbesondere über ein Vorgelege (53) mit einem in geschlossener Verdeckposition zweiten (25) und einem dritten seitlichen Dachrahmenelement (27) von vorne und hinten an einem Lenker (35, 37) des Hauptlenkersystems (31) angelenkt ist.

9. Verdeck nach einem der Ansprüche 1 bis 8,
**dadurch gekennzeichnet,**
**dass** das in geschlossener Verdeckposition in Verdecklängsrichtung hinter der Dachspitze (9) angeordnete Dachelement (13) über einen fest mit diesem Dachelement (13) verbundenen Lenker (61) und einen Steuerlenker (63) an einem in geschlossener Verdeckposition in Verdecklängsrichtung zweiten seitlichen Dachrahmenelement (25) und einem dritten seitlichen Dachrahmenelement (27) von vorne angelenkt sind.

10. Verdeck nach einem der Ansprüche 1 bis 9,
**dadurch gekennzeichnet,**
**dass** die Dachspitze (9) an einem in geschlossener Verdeckposition in Verdecklängsrichtung zweiten seitlichen Dachrahmenelement (25) von vorne angelenkt ist und mittels eines weiteren Steuerlenkers (65) mit einem fest mit einem in geschlossener Verdeckposition in Verdecklängsrichtung hinter der Dachspitze (9) angeordneten Dachelement (13) verbundenen Lenker (61) gekoppelt ist, wobei dieser Lenker (61) gelenkig mit dem zweiten seitlichen Dachrahmenelement (25) verbunden ist.

11. Verdeck nach einem der Ansprüche 1 bis 10,
**dadurch gekennzeichnet,**
**dass** ein in geschlossener Verdeckposition in Verdecklängsrichtung hinterstes Dachelement (17) über einen ersten Lenker (71) an dem Hauptlager (33) angebunden und über einen weiteren Lenker (73) mit dem Führungslenker (67) verbunden ist, wobei zur Steuerung einer Bewegung des hintersten Dachelements (17) ein Steuerlenker (75) vorgesehen ist.

12. Verdeck nach Anspruch 11,
**dadurch gekennzeichnet,**
**dass** der Steuerlenker (75) des hintersten Dachelements (17) einerseits mit dem weiteren Lenker (73) und andererseits mit dem in geschlossener Verdeckposition in Verdecklängsrichtung dritten seitlichen Dachrahmenelement (27) oder dem Steuerlenker (63) des in geschlossener Verdeckposition in Verdecklängsrichtung hinter der Dachspitze (9) angeordneten Dachelements (13) verbunden ist.

13. Verdeck nach einem der Ansprüche 1 bis 12,
**dadurch gekennzeichnet,**
**dass** die Dachelemente (9, 13, 15, 17) als Flächenspriegel ausgebildet sind.

14. Verdeck nach einem der Ansprüche 1 bis 13,
**dadurch gekennzeichnet,**
**dass** ein die Dachelemente (9, 13 ,15 ,17) zumindest teilweise von einer Innenseite verkleidender Innenhimmel (77) vorgesehen ist, welcher zumindest im Bereich eines in geschlossener Verdeckposition in Verdecklängsrichtung zweiten Dachelements (15) von vorne angebunden ist.
